# EUROPÄISCHE PATENTSCHRIFT

(11) **EP 3 105 459 B1**
(45) Veröffentlichungstag und Bekanntmachung des Hinweises auf die Patenterteilung: **27.05.2020**
(21) Anmeldenummer: 15700257.7
(22) Anmeldetag: 14.01.2015
(51) Int. Cl.: F16B 5/06, F16B 21/20, F16B 5/08, F16B 9/02

(54) **VERFAHREN ZUM FIXIEREN VON BAUTEILEN**
METHOD FOR FASTENING COMPONENTS
PROCÉDÉ DE FIXATION DE COMPOSANTS

(30) Priorität: 10.02.2014 DE 102014202359
(43) Veröffentlichungstag der Anmeldung: 21.12.2016
(73) Patentinhaber: Bayerische Motoren Werke Aktiengesellschaft, 80809 München (DE)
(72) Erfinder: KORBER, Franz, 84066 Mallersdorf (DE)
(86) Internationale Anmeldenummer: PCT/EP2015/050586
(87) Internationale Veröffentlichungsnummer: WO 2015/117798

(56) Entgegenhaltungen:
- EP-A1- 2 154 054
- DE-A1- 3 642 151
- DE-A1-102010 040 547
- DE-U1- 20 111 019
- GB-A- 2 426 633
- US-A- 2 275 058
- US-A- 2 318 640
- US-A- 3 207 022
- US-A- 3 523 299

## Beschreibung

Die Erfindung betrifft ein Verfahren zum Fixieren von Bauteilen, nämlich von Blechteilen im Karosseriebau.

Im Kraftfahrzeug-Karosseriebau werden Blechteile vor dem Verschweißen relativ zueinander positioniert und in der vorbestimmten Position fixiert. Dies geschieht z. B. mithilfe von Spannrahmen, in denen die Blechteile mittels komplexer Aufnahme- und Spanntechnik festgehalten werden.

Die Merkmale des Oberbegriffs des Anspruchs 1 sind aus der DE 10 2010 040 547 A1 bekannt. Die darin beschriebene Bauteilverbindung umfasst ein erstes Fahrzeugbauteil mit einem abstehenden männlichen Fixierelement und ein zweites Fahrzeugbauteil, das ein zur Aufnahme des männlichen Fixierelements vorgesehenes weibliches Fixierelement aufweist. Das männliche Fixierelement weist einen kugelförmigen Funktionskopf auf. Der Funktionskopf weist quer zur Einführrichtung ein Übermaß in Bezug auf das weibliche Fixierelement auf, so dass die beiden Fahrzeugbauteile an den Fixierelementen lösbar aneinander geklemmt werden können.

Ähnliche Verfahren sind auch aus DE 36 42 151 A1, EP 2 154 054 A1, GB 2 426 633 A und US 2 275 058 bekannt.

Ein Verfahren gemäß dem Oberbegriff des Anspruchs 1 ist auch aus der DE 201 11 019 U1 bekannt. Zur Befestigung eines Funktionselementes oder einer Funktionseinheit auf einer Trägerplatte einer Kraftfahrzeugtür sind auf der Trägerplatte ein oder mehrere Dome angeordnet, während das Funktionselement oder die Funktionseinheit einen oder mehrere Federringe aufweist. Die Dome und die Federringe sind derart ausgebildet, dass die Federringe an den Domen mittels Kraftschluss oder Formschluss fixierbar sind.

US 2 318 640 A, US 3 523 299 A und US 3 207 022 A betreffen aus Blech bestehende Klemmvorrichtungen und zeigen jeweils Befestigungszungen, die mittels länglicher Formprägungen stabilisiert sind.

Aufgabe der Erfindung ist es, das Fixieren von Bauteilen unter Einhaltung der hohen Anforderungen an die Genauigkeit der Positionierung zu vereinfachen und kostengünstiger zu gestalten.

Gelöst wird diese Aufgabe durch ein Verfahren zum Fixieren von Bauteilen mit den Merkmalen des Anspruchs 1. Vorteilhafte und zweckmäßige Ausgestaltungen des erfindungsgemäßen Verfahrens sind in den zugehörigen Unteransprüchen angegeben.

Das erfindungsgemäße Verfahren zum Fixieren von Bauteilen, nämlich von Blechteilen im Karosseriebau, umfasst folgende Schritte:
- Bereitstellen eines ersten Bauteils mit wenigstens einem Aufnahmeloch in einem plattenartigen Bereich des ersten Bauteils, wobei sich vom Rand des Aufnahmelochs mehrere Klemmabschnitte in Richtung Lochmitte erstrecken;
- Bereitstellen eines zweiten Bauteils mit wenigstens einem sich von einer Oberfläche des zweiten Bauteils erstreckenden Fortsatz; und
- Einführen des Fortsatzes in das Aufnahmeloch unter Verbiegen der Klemmabschnitte.

Die Erfindung beruht auf der Erkenntnis, dass bei der Fixierung von Bauteilen, insbesondere von Blechteilen im Karosseriebau, auf aufwendige Spannrahmen und dergleichen verzichtet werden kann, wenn eine genaue und stabile Positionierung durch effektives Klemmen der Bauteile erreicht werden kann. Genau dies schafft das erfindungsgemäße Verfahren, indem der Fortsatz des zweiten Bauteils in das mit den Klemmabschnitten versehene Aufnahmeloch des ersten Bauteils eingeführt wird.

Die Klemmabschnitte erstrecken sich ursprünglich in Richtung der Mitte des Aufnahmelochs (wobei dies nicht zwingend erfordert, dass die Klemmabschnitte genau in derselben Ebene liegen wie derjenige Bereich des Bauteils, der das Aufnahmeloch umgibt). Die Klemmabschnitte können einfach zusammen mit den Aufnahmelöchern gestanzt oder auf sonstige Weise ausgeschnitten werden. Sie ersetzen die bislang üblichen Befestigungselemente, wie etwa Grobgewindebolzen, Buckelmuttern oder dergleichen, die in einem aufwendigen Arbeitsschritt angeschweißt werden müssen.

Beim Einführen werden die Klemmabschnitte durch den Fortsatz verbogen. Dieses Verbiegen der Klemmabschnitte in der Einführrichtung des Fortsatzes erfolgt zumindest teilweise elastisch. Deshalb üben die Klemmabschnitte in der Gegenrichtung eine Klemmkraft auf den Fortsatz aus, die, wie sich herausgestellt hat überraschend groß ist. Die Klemmkraft reicht in jedem Fall aus, um das zweite Bauteil mit dem Fortsatz definiert und sicher im Aufnahmeloch zu halten, insbesondere wenn mehr als nur ein Fortsatz-Aufnahmeloch-Paar vorgesehen ist. Die zu fügenden Bauteile können dabei von Greifrobotern aufgenommen und so relativ zueinander bewegt werden, dass die Fortsätze in die Aufnahmelöcher eingeführt werden.

Ein wesentlicher Vorteil der Erfindung ist, dass die Klemmabschnitte bei geeigneter Anordnung den Fortsatz im Aufnahmeloch automatisch zentrieren. Die für die Erfindung benötigten Aufnahmelöcher und Fortsätze können dank moderner Technik hinsichtlich Lage, Form und Abmessungen so genau gefertigt werden, dass die hohen Anforderungen an die Fixierung von Bauteilen im Fahrzeug-Karosseriebau erfüllt werden. Mit dem erfindungsgemäßen Verfahren ist es somit auf einfache Weise möglich, ohne die bislang übliche Aufnahme- und Spanntechnik komplexe Karosserien zu bauen.

Idealerweise sind die Form und die Abmessungen des Aufnahmelochs genau an die Querschnittsform und -abmessungen des Fortsatzes angepasst. So ergibt sich eine definierte, spielfreie Positionierung und Fixierung der Bauteile.

Vorzugsweise weist der Fortsatz einen zylindrischen Abschnitt auf, der leicht herzustellen ist. Dazu passend sollte das Aufnahmeloch einen an den Durchmesser des zylindrischen Abschnitts angepassten Durchmesser aufweisen. "Angepasst" bedeutet, dass der Durchmesser des Aufnahmelochs nicht kleiner, sondern am besten geringfügig größer als der Durchmesser des Fortsatzes ist, wobei unvermeidbare Toleranzen und der Biegeradius der Klemmabschnitte zu berücksichtigen sind.

Gemäß einer bevorzugten Ausführungsform der Erfindung ist die von der Oberfläche des zweiten Bauteils abgewandte Stirnseite des Fortsatzes geschlossen. Eine solche Ausbildung des Fortsatzes hat den Vorteil, dass nach dem Fixieren der Bauteile keine offenen Löcher vorhanden sind, die ansonsten abgedichtet werden müssten. Dies ist insbesondere beim Karosseriebau von Vorteil, da somit der Eintritt von Wasser weitgehend verhindert wird, was für den Korrosionsschutz von Bedeutung ist. Außerdem wirken die geschlossenen Fortsätze einer unerwünschten Schallausbreitung entgegen.

Im Hinblick auf die Montage ist ein Fortsatz von Vorteil, der sich zu seinem von der Oberfläche abgewandten Ende hin verjüngt. Diese Gestaltung unterstützt das Einführen des Fortsatzes in das zugeordnete Aufnahmeloch, da ein konisch geformtes Ende das Biegen der Klemmabschnitte erleichtert.

Für eine gleichmäßige Kraftverteilung auf den Fortsatz sollten die Klemmabschnitte gleichmäßig über den Umfang des Aufnahmelochs verteilt sein. Dadurch wird der Fortsatz nicht unnötig zu einer Seite gedrückt. Eine gleichmäßige Verteilung der Klemmabschnitte sorgt auch für eine optimale Zentrierung des Fortsatzes im Aufnahmeloch.

Beim Design der Klemmabschnitte sollte darauf geachtet werden, dass deren Abstände in Umfangsrichtung des Aufnahmelochs so bemessen sind, dass sich die Klemmabschnitte bei einem Umbiegen nicht gegenseitig berühren. Die Folge wäre sonst eine suboptimale Klemmwirkung.

Zur Erhöhung des Biegewiderstands der Klemmabschnitte sind gemäß der Erfindung Formprägungen in Form von Sicken im Biegebereich vorgesehen. Die quer über die Biegeachse verlaufenden Sicken sind von dem dem Rand des Aufnahmelochs abgewandten Ende des Klemmabschnitts beabstandet und erzeugen beim Einführen des Fortsatzes in das Aufnahmeloch zusätzliche Widerstandsmomente, um den für das Biegen der Klemmabschnitte erforderlichen Kraftaufwand zu erhöhen. Dadurch wird umgekehrt die Klemmkraft auf den Fortsatz erhöht.

Gemäß einer Weiterbildung der Erfindung können drei oder mehr Bauteile relativ zueinander fixiert werden, indem zunächst wenigstens zwei Bauteile mit im Wesentlichen deckungsgleichen Aufnahmelöchern so übereinander angeordnet werden, dass die Mittelachsen der Aufnahmelöcher zusammenfallen und die Klemmabschnitte der übereinander angeordneten Bauteile sich nicht überdecken. Anschließend wird dann ein weiteres Bauteil mit einem Fortsatz in die Aufnahmelöcher eingeführt unter Verbiegen der Klemmabschnitte der übereinander angeordneten Bauteile.

Wie bereits erwähnt können das bzw. die Aufnahmelöcher und die Klemmabschnitte vorteilhaft in nur einem Stanzschritt hergestellt werden. Eine Nachbearbeitung ist in der Regel nicht erforderlich. Das bedeutet, dass das Bauteil mit dem bzw. den Aufnahmelöchern und den Klemmabschnitten werkzeugfallend in einem Presswerk gefertigt werden kann.

Ein erfindungsgemäßer Fortsatz wird am einfachsten durch Tiefziehen des zweiten Bauteils gebildet. Diese Technik ist seit langem bewährt und erlaubt eine präzise Gestaltung des Fortsatzes.

Nach der (vorläufigen) Positionierung und Fixierung der Bauteile mittels der Fortsätze und Aufnahmelöcher können die Bauteile ohne weitere Positionierungshilfen aneinander gefügt werden, insbesondere durch Schweißen, entweder um die Fixierung vor einer weiteren Bearbeitung oder Lagerung "einzufrieren", oder um die Bauteile endgültig miteinander zu verbinden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figuren 1a bis 1d Draufsichten auf Bauteile mit Aufnahmelöchern und Klemmabschnitten in verschiedenen Ausführungsvarianten, wobei nur die Variante in Figur 1a erfindungsgemäß ist;
- Figur 2 eine Draufsicht auf ein Aufnahmeloch und eine seitliche Schnittansicht eines Fortsatzes;
- Figuren 3a und 3b zwei seitliche Schnittansichten eines Aufnahmelochs und eines Fortsatzes in zwei aufeinanderfolgenden Schritten des erfindungsgemäßen Verfahrens;
- Figur 4 eine Draufsicht auf zwei aufeinanderliegende Bauteile mit Aufnahmelöchern und Klemmabschnitten;
- Figur 5 eine seitliche Schnittansicht eines in den Aufnahmelöchern der Bauteile aus Figur 4 fixierten Fortsatzes; und
- Figuren 6a und 6b seitliche Schnittansichten eines Presswerks in zwei aufeinanderfolgenden Schritten bei der Herstellung eines Fortsatzes..

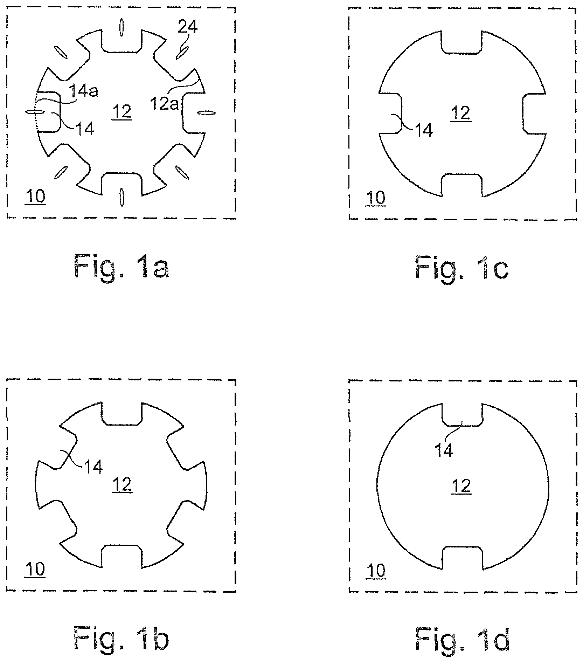

In den Figuren 1a bis 1d ist jeweils ein plattenartiger (d. h. flacher) Bereich eines ersten Bauteils 10 mit einem Aufnahmeloch 12 und mehreren Klemmabschnitten 14 dargestellt. Die Klemmabschnitte 14 erstrecken sich vom Rand 12a des Aufnahmelochs 12 in Richtung Lochmitte. Bei den dargestellten Ausführungsvarianten sind die Klemmabschnitte 14 gleichmäßig über den Rand 12a des Aufnahmelochs 12 verteilt, d. h. in Umfangsrichtung sind die Abstände zwischen benachbarten Klemmabschnitten 14 immer gleich groß. Obwohl die gleichmäßige Verteilung der Klemmabschnitte 14 für deren später erläuterte Funktion vorteilhaft ist, insbesondere bei einer kleinen Anzahl von Klemmabschnitten 14, ist sie nicht zwingend erforderlich. In Figur 1a sind 8 acht, in Figur 1b sechs, in Figur 1c vier und in Figur 1d zwei Klemmabschnitte 14 vorgesehen. Selbstverständlich ist auch eine ungerade Anzahl von Klemmabschnitten 14 möglich. Die Mindestanzahl ist aber zwei.

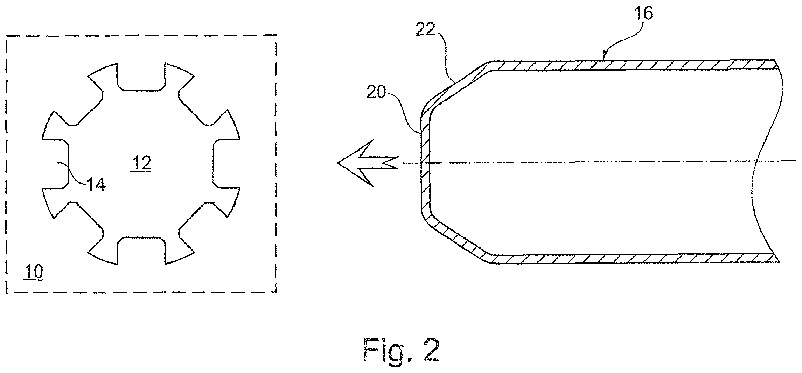

Figur 2 zeigt einen Fortsatz 16, der sich von einer Oberfläche eines zweiten Bauteils 18 (in Figur 2 nicht sichtbar) erstreckt. Der Fortsatz 16 ist hier rohrförmig, wobei die von der Bauteiloberfläche abgewandte Stirnseite 20 geschlossen ist. Gemäß dem dargestellten Ausführungsbeispiel ist der Fortsatz 16 rotationssymmetrisch, genauer gesagt zylindrisch. Nur der von der Bauteiloberfläche abgewandte Endabschnitt 22 des Fortsatzes 16 ist konisch verjüngt. Der Durchmesser des zylindrischen Abschnitts des Fortsatzes ist auf den Durchmesser des Aufnahmelochs 12 abgestimmt, d. h. er ist geringfügig kleiner.

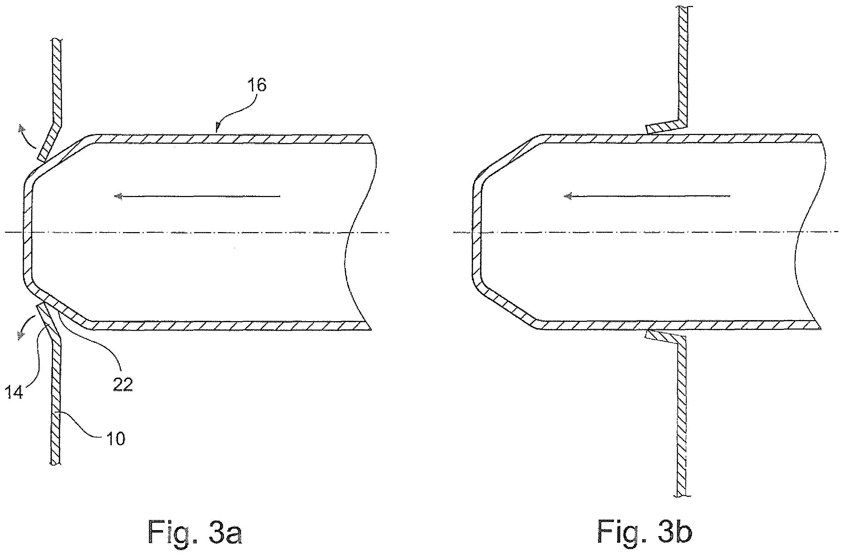

Die Figuren 3a und 3b zeigen, wie die beiden Bauteile 10, 18 fixiert werden. Das zweite Bauteil 18 nähert sich dem ersten Bauteil 10 so an, dass der Fortsatz 16 in das zugeordnete Aufnahmeloch 12 eingeführt wird, was durch den konisch geformten Endabschnitt 22 erleichtert wird. Beim Einführen des Fortsatzes 16 kommt dieser in Kontakt mit den Klemmanschnitten 14 und biegt diese um den (an dieser Stelle virtuellen) Rand 12a des Aufnahmelochs 12 um. Die Klemmabschnitte 14 setzen also dem Einführen des Fortsatzes 16 einen Widerstand entgegen. Dieser Widerstand wird andersherum zur Festlegung des Fortsatzes 16 im Aufnahmeloch 12 genutzt. Da die Verformung der Klemmabschnitte 14 zumindest teilweise elastisch erfolgt, üben die Klemmabschnitte 14 eine relativ große Klemmkraft auf den Fortsatz 16 aus. Dadurch wird das zweite Bauteil 18 sicher am ersten Bauteil gehalten.

Die ringsum angeordneten Klemmabschnitte 14 sorgen zudem für eine automatische Zentrierung des Fortsatzes 16, die mit sehr geringer Toleranz möglich ist. Die Zentrierung wird begünstigt durch eine große Anzahl von Klemmabschnitten 14, die alle die gleiche Form haben und gleichmäßig über den Umfang des Aufnahmelochs 12 verteilt sind.

Für die Festlegung der axialen Position des zweiten Bauteils 18 relativ zum ersten Bauteil 10 können ein die Einführtiefe begrenzender Anschlag oder vergleichsbare Hilfsmittel vorgesehen sein.

Obwohl die Klemmkraft auf den Fortsatz 16 bereits sehr groß ist, können dennoch ergänzende Maßnahmen zum "Einfrieren" der Fixierung vorgesehen sein. So können die Klemmabschnitte 14 mit dem Fortsatz verschweißt werden, beispielsweise durch Kehlnahtschweißen an der freien Auflagekante der Klemmabschnitte oder durch Auftragsschweißen, um eine Auflagefläche der Klemmabschnitte 14 mit dem Fortsatz 16 zu verbinden.

Die Anzahl der Klemmabschnitte 14 an einem Aufnahmeloch 12 hängt typischerweise von der Dicke des Bauteilbereichs ab, in dem sich das Aufnahmeloch 12 befindet. Grundsätzlich gilt: je dünner das Material, desto größer die Anzahl der Klemmabschnitte 14. So ist die Kraft, die erforderlich ist, um acht 0,8 mm dicke Klemmabschnitte 14 umzubiegen, ungefähr vergleichbar mit der Kraft, die zum Umbiegen von vier 1,3 mm dicken Klemmabschnitten 14 erforderlich ist.

Eine weitere Möglichkeit, den Kraftaufwand für das Einführen eines Fortsatzes 16 in ein zugeordnetes Aufnahmeloch 12 und damit die Klemmkraft anzupassen bzw. fein einzustellen, ist das Variieren der Breite der Stege 14a der Klemmabschnitte 14 (siehe Figur 1a). Ein Klemmabschnitt 14 mit einer kürzeren Stegbreite lässt sich leichter umbiegen als ein Klemmabschnitt 14 mit einer größeren Stegbreite.

Zur Erhöhung der Klemmkraft sind erfindungsgemäß an einigen oder allen Klemmabschnitten 14 Formprägungen 24, insbesondere in Form von Sicken, vorgesehen. Bei dem in Figur 1a dargestellten Ausführungsbeispiel erstrecken sich die Formprägungen 24 in der Mitte der Klemmabschnitte 14 quer über die Stege 14a, wobei die Längsachse der Formprägungen 24 jeweils im Wesentlichen senkrecht zum Steg 14a orientiert ist. Die Formprägungen 24 sorgen beim Einführen des Fortsatzes 16 in das Aufnahmeloch 12 für zusätzliche Widerstandsmomente, welche das Verbiegen der Klemmabschnitte 14 erschweren.

Die Größe eines Fortsatzes 16 kann je nach Anforderungen und fertigungstechnischen Gegebenheiten von Durchmessern und Längen im Millimeterbereich bis zum Zentimeter- oder sogar Meterbereich reichen, wenn z. B. große Stahlbauteile fixiert werden sollen. Der Durchmesser jedes Aufnahmelochs 12 ist an den Durchmesser des jeweils zugeordneten Fortsatzes 16 angepasst.

Die Fortsätze 16 müssen nicht zwingend einen kreisförmigen Querschnitt haben, sondern können auch elliptisch oder eckig sein, wobei die Form der zugeordneten Aufnahmelöcher 12 entsprechend anzupassen ist. Insbesondere bei einer eckigen Gestaltung kann dadurch eine bestimmte Orientierung der beiden zu fixierenden Bauteile 10, 18 vorgegeben werden.

Bei größeren Bauteilen ist in der Regel eine Vielzahl von Fortsatz-Aufnahmeloch-Paaren vorgesehen. Dabei kann ein Bauteil sowohl Aufnahmelöcher 12 als auch Fortsätze 16 haben, die jeweils entsprechenden Fortsätzen 16 bzw. Aufnahmelöchern 12 des anderen Bauteils zugeordnet sind.

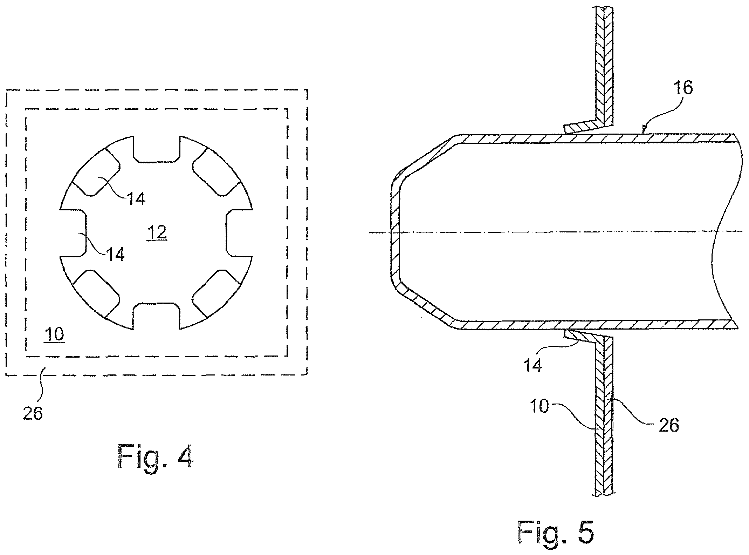

Die Figuren 4 und 5 zeigen, wie die zwei Bauteile 10, 18 und ein drittes Bauteil 26 relativ zueinander fixiert werden können. Die beiden Bauteile 10 und 26 weisen jeweils ein Aufnahmeloch 12 mit gleichem Durchmesser auf. Wie in Figur 4 zu erkennen ist, sind die beiden Bauteile 10, 26 so übereinander angeordnet, dass die Mittelachsen der Aufnahmelöcher 12 zusammenfallen. Die Anzahl der in die Aufnahmelöcher 12 ragenden Klemmabschnitte 14 und die (Dreh-)Anordnung der beiden Bauteile 10, 26 bezüglich der Mittelachsen der Aufnahmelöcher 12 ist so gewählt, dass sich die Klemmabschnitte 14 der beiden Bauteile 18, 26 nicht gegenseitig überdecken. Das bedeutet, dass sich die Klemmabschnitte 14 des Bauteils 10 in den Lücken zwischen den Klemmabschnitten 14 des Bauteils 26 befinden und umgekehrt.

Wird dann, wie in Figur 5 gezeigt, der Fortsatz 16 des zweiten Bauteils 18 in die Aufnahmelöcher 12 eingeführt, biegt der Fortsatz 16 sowohl die Klemmabschnitte 14 des ersten Bauteils 10 als auch die Klemmabschnitte 14 des dritten Bauteils 26 um. Dadurch wird sowohl das erste als auch das dritte Bauteil 10, 26 am Fortsatz 16 des zweiten Bauteils 18 gehalten. Die Anzahl und die Anordnung der Klemmabschnitte 14 der beiden Bauteile 10, 26 sind so gewählt, dass sie sich beim Umbiegen nicht gegenseitig berühren.

Auf die gleiche Weise lassen sich noch mehr aufeinander gestapelte Bauteile fixieren. Die Länge des bzw. der Fortsätze 16 ist dann ausreichend groß zu wählen.

Insbesondere bei Blechteilen lassen sich die Aufnahmelöcher 12 und die Klemmabschnitte 14 einfach durch Stanzen herstellen, wobei nur ein einziger Stanzschritt erforderlich ist.

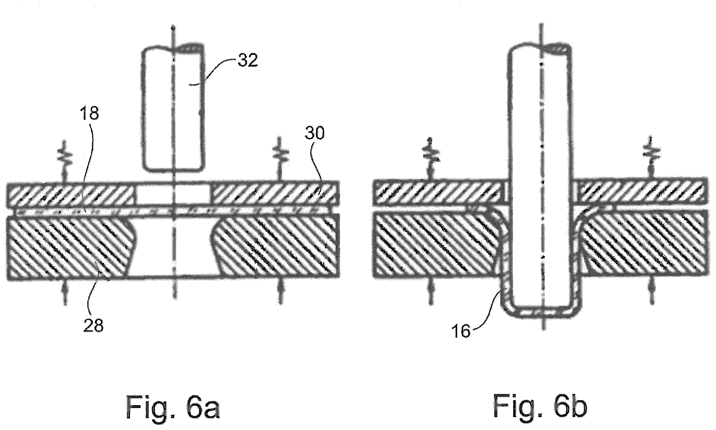

Die Fortsätze 16 lassen sich durch Tiefziehen herstellen, wie beispielhaft in den Figuren 6a und 6b dargestellt. Das Bauteil 18 wird zwischen einen Ziehring 28 und einen federnden Niederhalter 30 eingelegt (Figur 6a), bevor ein Stempel 32 niedergedrückt wird, um den Fortsatz 16 zu formen (Figur 6b). Die Form des Stempels 32 bestimmt im Wesentlichen die Form des Fortsatzes 16.

### Bezugszeichenliste

- 10: erstes Bauteil
- 12: Aufnahmeloch
- 12a: Rand
- 14: Klemmabschnitte
- 14a: Steg
- 16: Fortsatz
- 18: zweites Bauteil
- 20: Stirnseite
- 22: Endabschnitt
- 24: Formprägung
- 26: drittes Bauteil
- 28: Ziehring
- 30: Niederhalter
- 32: Stempel

## Patentansprüche

1. Verfahren zum Fixieren von Bauteilen (10, 18; 26), nämlich von Blechteilen im Karosseriebau, mit folgenden Schritten:
- Bereitstellen eines ersten Bauteils (10) mit wenigstens einem Aufnahmeloch (12) in einem plattenartigen Bereich des ersten Bauteils (10), wobei sich vom Rand (12a) des Aufnahmelochs (12) mehrere Klemmabschnitte (14) in Richtung Lochmitte erstrecken;
- Bereitstellen eines zweiten Bauteils (18) mit wenigstens einem sich von einer Oberfläche des zweiten Bauteils (18) erstreckenden Fortsatz (16); und
- Einführen des Fortsatzes (16) in das Aufnahmeloch (12) unter Verbiegen der Klemmabschnitte (14);
**dadurch gekennzeichnet, dass** zur Erhöhung des Biegewiderstands der Klemmabschnitte (14) im Biegebereich Formprägungen (24) in Form von Sicken vorgesehen sind, die quer über die Biegeachsen der Klemmabschnitte (14) verlaufen und von dem dem Rand (12a) des Aufnahmelochs (12) abgewandten Ende des Klemmabschnitts (14) beabstandet sind, wobei die Formprägungen (24) beim Einführen des Fortsatzes (16) in das Aufnahmeloch (12) zusätzliche Widerstandsmomente erzeugen, um den für das Biegen der Klemmabschnitte (14) erforderlichen Kraftaufwand und dadurch die Klemmkraft auf den Fortsatz (16) zu erhöhen.

2. Verfahren nach Anspruch 1, **dadurch gekennzeichnet, dass** die Form und die Abmessungen des Aufnahmelochs (12) an die Querschnittsform und -abmessungen des Fortsatzes (14) angepasst sind.

3. Verfahren nach einem der vorhergehenden Ansprüche, **dadurch gekennzeichnet, dass** der Fortsatz (16) einen zylindrischen Abschnitt aufweist und das Aufnahmeloch (12) einen an den Durchmesser des zylindrischen Abschnitts angepassten Durchmesser aufweist.

4. Verfahren nach einem der vorhergehenden Ansprüche, **dadurch gekennzeichnet, dass** die von der Oberfläche abgewandte Stirnseite (20) des Fortsatzes (16) geschlossen ist.

5. Verfahren nach einem der vorhergehenden Ansprüche, **dadurch gekennzeichnet, dass** sich der Fortsatz (16) zu seinem von der Oberfläche abgewandten Ende verjüngt.

6. Verfahren nach einem der vorhergehenden Ansprüche, **dadurch gekennzeichnet, dass** die Klemmabschnitte (14) gleichmäßig über den Umfang des Aufnahmelochs (12) verteilt sind.

7. Verfahren nach einem der vorhergehenden Ansprüche, **dadurch gekennzeichnet, dass** die Abstände der Klemmabschnitte (14) in Umfangsrichtung des Aufnahmelochs (12) so bemessen sind, dass sich die Klemmabschnitte (14) bei einem Umbiegen nicht gegenseitig berühren.

8. Verfahren nach einem der vorhergehenden Ansprüche, **dadurch gekennzeichnet, dass** wenigstens drei Bauteile (10, 18, 26) relativ zueinander fixiert werden, indem zunächst wenigstens zwei Bauteile (10, 26) mit im Wesentlichen deckungsgleichen Aufnahmelöchern (12) so übereinander angeordnet werden, dass die Mittelachsen der Aufnahmelöcher (12) zusammenfallen und die Klemmabschnitte (14) der übereinander angeordneten Bauteile (18, 26) sich nicht überdecken, und anschließend ein weiteres Bauteil (18) mit einem Fortsatz (16) in die Aufnahmelöcher (12) eingeführt wird unter Verbiegen der Klemmabschnitte (14) der übereinander angeordneten Bauteile (18, 26).

9. Verfahren nach einem der vorhergehenden Ansprüche, **dadurch gekennzeichnet, dass** das Aufnahmeloch (12) und die Klemmabschnitte (14) in nur einem Stanzschritt hergestellt werden.

10. Verfahren nach einem der vorhergehenden Ansprüche, **dadurch gekennzeichnet, dass** der Fortsatz (16) durch Tiefziehen des zweiten Bauteils (18) gebildet wird.

11. Verfahren nach einem der vorhergehenden Ansprüche, **dadurch gekennzeichnet, dass** die fixierten Bauteile (10, 18; 26) ohne weitere Positionierungshilfen aneinander gefügt werden, insbesondere durch Schweißen.

## Claims

1. A method for fixing components (10, 18; 26), namely sheet-metal parts in the vehicle body manufacturing sector, having the following steps:
- providing a first component (10) having at least one receiving hole (12) in a plate-like region of the first component (10), wherein from the edge (12a) of the receiving hole (12) a plurality of clamping portions (14) extend in the direction of the centre of the hole;
- providing a second component (18) having at least one extension (16) extending from a surface of the second component (18); and
- introducing the extension (16) into the receiving hole (12), bending the clamping portions (14);
**characterised in that** in order to increase the bending resistance of the clamping portions (14) in the bending region shaped stamped portions (24) in the form of beads are provided which run transversely over the bending axes of the clamping portions (14) and are spaced apart from that end of the clamping portion (14) which is remote from the edge (12a) of the receiving hole (12), the shaped stamped portions (24) upon introduction of the extension (16) into the receiving hole (12) generating additional moments of resistance in order to increase the application of force necessary for bending the clamping portions (14) and thereby the clamping force on the extension (16).

2. A method according to Claim 1, **characterised in that** the form and the dimensions of the receiving hole (12) are adapted to the cross-sectional form and cross-sectional dimensions of the extension (14).

3. A method according to one of the preceding claims, **characterised in that** the extension (16) has a cylindrical portion and the receiving hole (12) has a diameter which is adapted to the diameter of the cylindrical portion.

4. A method according to one of the preceding claims, **characterised in that** the end face (20) of the extension (16) which is remote from the surface is closed.

5. A method according to one of the preceding claims, **characterised in that** the extension (16) tapers towards its end which is remote from the surface.

6. A method according to one of the preceding claims, **characterised in that** the clamping portions (14) are distributed evenly over the periphery of the receiving hole (12).

7. A method according to one of the preceding claims, **characterised in that** the distances between the clamping portions (14) in the peripheral direction of the receiving hole (12) are such that the clamping portions (14) do not mutually touch each other upon being bent over.

8. A method according to one of the preceding claims, **characterised in that** at least three components (10, 18, 26) are fixed relative to each other, **in that** first of all at least two components (10, 26) with substantially congruent receiving holes (12) are arranged one above the other such that the central axes of the receiving holes (12) coincide and the clamping portions (14) of the components (18, 26) which are arranged one above the other do not cover one another, and then a further component (18) having an extension (16) is introduced into the receiving holes (12), bending the clamping portions (14) of the components (18, 26) which are arranged one above the other.

9. A method according to one of the preceding claims, **characterised in that** the receiving hole (12) and the clamping portions (14) are produced in only one punching step.

10. A method according to one of the preceding claims, **characterised in that** the extension (16) is formed by deep drawing the second component (18).

11. A method according to one of the preceding claims, **characterised in that** the fixed components (10, 18; 26) are joined to each other without further positioning aids, especially by welding.

## Revendications

1. Procédé de fixation de composants (10, 18, 26), à savoir de pièces en tôle lors du montage de carrosseries comprenant les étapes suivantes consistant à :
- se procurer une première pièce (10) ayant au moins un trou de réception (12) dans une zone en forme de plaque de celle-ci, plusieurs segments de serrage (14) s'étendant à partir du bord (12a) du trou de réception (12) en direction du centre du trou,
- se procurer une seconde pièce (18) ayant au moins un prolongement (16) s'étendant à partir d'une surface de celle-ci, et
- introduire le prolongement (16) dans le trou de réception (12) en fléchissant les segments de serrage (14),
**caractérisé en ce que**
pour augmenter la résistance à la flexion des segments de serrage (14) il est prévu dans leur zone de flexion, des gaufrages (24) sous la forme de gouttières qui s'étendent transversalement sur les axes de flexion des segments de serrage (14) et sont situés à distance de l'extrémité du segment du serrage (14) opposée au bord (12a) au trou de réception (12), les gaufrages (24) permettant d'obtenir lors de l'introduction du prolongement (16) dans le trou de réception (12) des couples résistants supplémentaires pour augmenter la force nécessaire à la flexion des segments de serrage (14) et ainsi la force de serrage sur le prolongement (16).

2. Procédé conforme à la revendication 1,
**caractérisé en ce que**
la forme et les dimensions du trou de réception (12) sont adaptées à la forme de la section et aux dimensions du prolongement (14).

3. Procédé conforme à l'une des revendications précédentes,
**caractérisé en ce que**
le prolongement (16) comporte un segment cylindrique et le trou de réception (12) à un diamètre adapté au diamètre du segment cylindrique.

4. Procédé conforme à l'une des revendications précédentes,
**caractérisé en ce que**
le côté frontal (20) du prolongement (16) situé à l'opposé de la surface est fermé.

5. Procédé conforme à l'une des revendications précédentes,
**caractérisé en ce que**
le prolongement (16) s'amincit vers son extrémité située à l'opposé de la surface.

6. Procédé conforme à l'une des revendications précédentes,
**caractérisé en ce que**
les segments de serrage (14) sont répartis régulièrement sur la périphérie du trou de réception (12).

7. Procédé conforme à l'une des revendications précédentes,
**caractérisé en ce que**
les distances des segments de serrage (14) dans la direction périphérique du trou de réception (12) sont choisies de sorte que ces segments de serrage (14) ne viennent pas mutuellement en contact lors d'une flexion.

8. Procédé conforme à l'une des revendications précédentes,
**caractérisé en ce qu'**
au moins trois composants (10, 18, 26) sont fixés les uns aux autres du fait qu'au moins deux composants (10, 26) sont tout d'abord positionnés l'un sur l'autre leurs trous de réception (12) coïncidant essentiellement, de sorte que les axes médians des trous de réception (12) coïncident et que les segments de serrage (14) des composants (18, 26) positionnés l'un sur l'autre ne se recouvrent pas, puis, qu'un autre composant (18) est introduit avec un prolongement (16) dans les trous de réception (12) avec flexion des segments de serrage (14) des composants (18, 26) positionnés l'un sur l'autre.

9. Procédé conforme à l'une des revendications précédentes,
**caractérisé en ce que**
le trou de réception (12) et les segments de serrage (14) sont obtenus par une seule étape de poinçonnage.

10. Procédé conforme à l'une des revendications précédentes,
**caractérisé en ce que**
le prolongement (16) est formé par emboutissage profond du second composant (18).

11. Procédé conforme à l'une des revendications précédentes,
**caractérisé en ce que**
les composants (10, 18, 26) fixés sont assemblés sans autre aide de positionnement en particulier par soudage.
